(19) Europäisches Patentamt
European Patent Office
Office européen des brevets

(11) **EP 1 689 802 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(21) Anmeldenummer: **04739424.2**

(22) Anmeldetag: **28.05.2004**

(51) Int Cl.:
**C08G 63/78** (2006.01)

(86) Internationale Anmeldenummer:
**PCT/EP2004/005769**

(87) Internationale Veröffentlichungsnummer:
**WO 2005/061581 (07.07.2005 Gazette 2005/27)**

(54) **VERFAHREN ZUR DIREKTEN UND KONTINUIERLICHEN HERSTELLUNG VON HOHLKÖRPERN AUS DER POLYMERSCHMELZE**

METHOD FOR THE DIRECT AND CONTINUOUS PRODUCTION OF HOLLOW BODIES FROM A POLYESTER MELT

PROCEDE DE PRODUCTION DIRECTE ET CONTINUE DE CORPS CREUX A PARTIR D'UNE MASSE POLYMERE FONDUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.11.2003 DE 10356298**

(43) Veröffentlichungstag der Anmeldung:
**16.08.2006 Patentblatt 2006/33**

(73) Patentinhaber: **Zimmer Aktiengesellschaft**
**60388 Frankfurt am Main (DE)**

(72) Erfinder:
- **OTTO, Brigitta**
  **14715 Milow (DE)**
- **SCHÄFER, Roland**
  **61352 Bad Homburg (DE)**

- **BACHMANN, Holger**
  **64331 Weiterstadt (DE)**
- **HÖLTING, Ludwig**
  **63486 Bruchköbel (DE)**
- **DEISS, Stefan**
  **55296 Harxheim (DE)**

(74) Vertreter: **Meyer-Dulheuer, Karl-Hermann**
**Dr. Meyer- Dulheuer & Partner**
**Patentanwaltskanzlei**
**Barckhausstrasse 12-16**
**60325 Frankfurt am Main (DE)**

(56) Entgegenhaltungen:
**EP-A- 0 727 303        EP-A- 1 188 783**
**WO-A-98/41559        US-A- 5 928 596**
**US-A- 5 945 460**

## Beschreibung

Die Erfindung betrifft ein kontinuierliches Verfahren zur direkten Herstellung von Formkörpern aus einer hochkondensierten Polyesterschmelze.

Im Folgenden werden stellvertretend für Formkörper Hohlkörper genannt. Die Erfindung ist aber sinngemäß auch auf die Herstellung von Folien und Filmen, die vergleichbare Anforderungen wie die genannten Hohlkörper erfüllen müssen, anwendbar.

## Stand der Technik

Die bekannten aromatischen Polyester oder Copolyester, insbesondere Polyethylenterephthalat und dessen Copolymere mit geringen Anteilen von beispielsweise Isophthalsäure oder Cyclohexandimethanol, Polybutylenterephthalat, Polytrimethylenterephthalat, Polyethylennaphthalat und deren Copolyestern, die als Ausgangsmaterial für die Herstellung von Hohlkörpern dienen, werden nach einer Schmelzepolykondensation bei einer bestimmten Intrinsischen Viskosität (I.V.), die z. B. bei Polyethylenterephthalat und seinen entsprechend niedrig modifizierten Copolyestern im Bereich zwischen 0,65 - 0,90 dl/g liegt, in Spritzgußmaschinen zu Hohlkörpern verarbeitet.

Das bisherige Standardverfahren für die Herstellung von PET zur Verwendung als Lebensmittelverpackung, insbesondere Flaschen, sieht wie folgt aus:

Terephthalsäure bzw. deren Ester werden in einer Veresterungsstufe, die aus einem oder auch aus mehreren hintereinandergeschalteten Reaktoren bestehen kann, mit Ethylenglykol verestert oder umgeestert.

Diese Ester werden unter weiterer Temperaturerhöhung und Druckreduktion in der Schmelze zu einem PET mittlerer Viskosität mit IV = 0,55 - 0,65 dl/g polykondensiert und das Produkt gekühlt und granuliert. Die Polykondensation wird üblicherweise mindestens zweistufig in einem sogenannten Vorkondensationsreaktor und einem nachfolgenden Endreaktor durchgeführt, die beide im Nachfolgenden auch allgemein als Kondensationsreaktoren bezeichnet werden. Auch eine noch höhere Anzahl an hintereinander angeordneten Kondensationsreaktoren ist je nach Anlagenkapazität und sonstigen Gegebenheiten möglich.

Die aus dem Endreaktor austretende Schmelze wird granuliert und dieses PET-Granulat anschließend in einem Reaktor zur Festphasenpolykondensation (Solid State Polykondensation, SSP) unter Inertgas bei Temperaturen von 180 - 230°C auf eine mittlere Viskosität von 0,75 - 0,85 dl/g gebracht. Das Granulat wird in der Regel als Endprodukt bezeichnet und verkauft. Verarbeiter dieses Granulates sind vor allem Hersteller von Hohlkörpern, die über Formgebungseinheiten verfügen. Dem Fachmann sind verschiedene Typen von Formgebungseinheiten bekannt, beispielsweise Spritzguß- und Blasformmaschinen. Häufig werden in nach dem Spritzgußverfahren arbeitenden Preformmaschinen Vorformlinge, sogenannte Preforms, hergestellt, aus denen wiederum in einem weiteren Schritt bei einem weiteren Verarbeiter, in der Regel auch an einem anderen Standort, Polyesterflaschen in einem Blasformverfahren produziert werden. Auch andere Formgebungen für Polyestergranulat, beispielsweise in Maschinen zur Film- und Folienherstellung sind mit dem hier vorgestellten erfindungsgemäßen Verfahren möglich.

Die SSP wird hauptsächlich aus zwei Gründen angewendet: Um eine ausreichende mechanische Stabilität der fertigen Flasche zu erhalten, muss die Viskosität über das bei Polyester für textile Anwendungen übliche Niveau angehoben werden. Außerdem muss der Acetaldehydgehalt in der aus dem Endreaktor austretenden Polymerschmelze von ca. 30 - 70 ppm auf < 1 ppm nach Abschluss der Festphasenpolykondensation vermindert werden, um den Geschmack des Füllgutes in der fertigen PET - Flasche möglichst wenig zu beeinträchtigen.

Acetaldehyd (AA) entsteht als übliches und unvermeidbares Nebenprodukt bei der PET-Herstellung. Vor allem aus geschmacklichen Gründen muss der AA-Gehalt in der fertigen Flasche entsprechend niedrig gehalten werden. Dieser Anteil ist bis zu einem gewissen Grad durch die technologischen Bedingungen der Polykondensation und der anschließenden Festphasenpolykondensation steuerbar. In Abhängigkeit von der Vorbehandlung der Polymerschmelze ("thermische Vorgeschichte"), den Bedingungen in der Festphasenpolykondensation und dem Betreiben der Preformmaschine bildet sich während der Aufschmelzphase des Granulates erneut Acetaldehyd. Während der Flaschenherstellung in der Blasformmaschine ändert sich die Acetaldehydkonzentration nur noch marginal.

In der fertigen Flasche zur Befüllung mit Süßgetränken sollte der AA-Wert 8 ppm und bei der Befüllung mit Wasser 4 ppm nicht überschreiten.

Die Durchführung der SSP erfordert einen erheblichen apparativen Aufwand: Bevor die SSP durchgeführt werden kann, müssen die amorphen Chips in einer aufwendigen Kristallisationsstufe kristallisiert werden, um in der anschließenden Festphasenpolykondensation Verklebungen zu vermeiden. In beiden Stufen werden erhebliche Mengen an Inertgas benötigt, die nach ihrer Verwendung zusätzlich gereinigt werden müssen, damit sie wieder in den Prozess zurückgeführt werden können.

Da inzwischen auch die Nachfrage nach Polyesterflaschen stark gestiegen ist, haben die Anlagen zur Herstellung von Preforms nun Größen erreicht, die den Einsatz einer eigenen Polyestersyntheseanlage ausschließlich zur Versorgung der Preform-Herstellung ökonomisch sinnvoll erscheinen lassen. Dabei bestünde die Möglichkeit, die fertige Polyesterschmelze direkt in die Preformmaschinen zu leiten.

Deshalb hat es nicht an Versuchen gefehlt, in Analogie zur Faserherstellung direkt aus der Polykondensationsschmelze die sehr kostenaufwendigen und zeitraubenden Schritte in der SSP zu umgehen.

So wird in der DE 195 03 053 ein Verfahren beschrieben, in dem die aus dem Polykondensationsreaktor austretende Schmelze in einer mit statischen Mischelementen versehenen Strecke mit einem Inertgas und einer AA-reduzierenden schwerflüchtigen Amidverbindung versetzt wird und unter Vakuumentgasung in kürzestmöglicher Zeit und unter geringstmöglicher Scherung der Schmelze einer Formgebungsvorrichtung zur Herstellung von Preforms zugeführt wird.

In der DE 195 05 680 wird der Polykondensationsschmelze mit einer IV = 0;5-0,75 dl/g ein Inertgas zugesetzt, in einem Nachkondensationsreaktor unter Vakuum bis zu einer Viskosität von 0,75-0,95 dl/g polykondensiert und die Schmelze danach sofort in ein Spritzgusswerkzeug geleitet.

Die EP 0 842 210 nennt eine andere Möglichkeit zur Umgehung der SSP. Dort wird die Schmelzepolykondensation bis zu einer Viskosität von 0,65-0,85 dl/g durchgeführt, der Polyester gekühlt und granuliert, wieder aufgeschmolzen und danach unter Bildung einer großen Oberfläche in einer geeigneten Vorrichtung durch Spülen mit einem geeigneten Spülmittel von flüchtigen Substanzen wie AA befreit.

In der EP 0 842 211 wird ein Verfahren vorgeschlagen, in dem die Polykondensationsschmelze in einen entgasenden Extruder mit Polymerkompressionszone überführt wird, gleichzeitig ein geeignetes Spülmittel zu- und wieder abgeführt wird und die so behandelte Schmelze direkt in eine Formgebungsvorrichtung überführt wird.

Die EP 0 836 548 befasst sich mit der apparativen Gestaltung der Weiterführung einer Polykondensationsschmelze über eine Mischstrecke und einen Verteiler in eine Spritzgussvorrichtung, ohne weitere Einzelheiten zum Verfahren zu nennen.

Die US 6,099,778 offenbart ein Verfahren, in dem eine Polykondensationsschmelze direkt in eine Formgebungsvorrichtung überführt wird. Das Verfahren ist an die Bedingungen geknüpft, dass der Katalysator für die Polykondensation frei von Kobalt ist, eine acetaldehydreduzierende Verbindung zugesetzt und die Schmelze vor der Zufuhr in die Formgebungsvorrichtung bei einem Druck oberhalb von 25 mm Hg bis zu fast Normaldruck entgast wird, wobei die Entgasungsvorrichtung z.B. aus einem Entgasungsextruder oder anderen geeigneten konventionellen Apparaturen bestehen kann. Als AA-reduzierende Substanzen werden hauptsächlich Polyamide, Polyesteramide und Polyethylenisophthalat genannt.

Die WO 98/41381 beschreibt eine Apparatur und ein kontinuierliches Verfahren zur Herstellung von geformten Polyesterartikeln mit niedrigem AA-Gehalt aus der Polykondensationsschmelze ohne zwischenzeitliches Erstarren des Polyesters. Dabei wird die Polykondensationsschmelze in einem Extruder unter Druck mit einem Inertgas vermischt, die Schmelze unter Vakuum entgast und in einer Mischzone mit einer AA-reduzierenden Verbindung umgesetzt, um danach sofort in die Spritzgusseinheit geführt zu werden. Als AA-reduzierende Verbindungen werden im Prinzip die in der vorher angeführten US-Anmeldung genannten Verbindungen aufgeführt.

In der EP 0 968 243 wird ein ähnlicher Prozess beschrieben. Die Polykondensationsschmelze wird dort in eine Mischvorrichtung geführt, die aus einem Statikmischer, einer Zahnradpumpe oder einem Extruder bestehen kann. In ihr werden ein Abstreifmittel wie Stickstoff oder Kohlendioxid und AA-Reduktionsmittel wie Polyamide oder Polyesteramide eingespeist. Die Schmelze wird aus dieser Mischvorrichtung über eine oder mehrere Düsen in einen Schnellverdampfer überführt. Dort wird sie unter einem Vakuum von 5-50 mm Hg entgast und in eine Formgebungsvorrichtung eingespeist, wobei nochmals AA-Reduktionsmittel zugegeben werden können.

In einem Vortrag am 25./26.02.2003 hat Inventa-Fischer einen weiteren Prozess zur Herstellung von Preforms direkt aus der Polykondensationsschmelze vorgestellt. Demzufolge wird ein Hochviskositätsreaktor in eine Linie eingebaut, die PET- Prepolymer liefert, und die Viskosität auf 0,85 dl/g angehoben. Danach werden AA-Reduktionsmittel und ggf. andere Additive in die Schmelze eingespeist und die Mischung über einen Mischer in die Spritzgussmaschine überführt.

In der DE 100 45 719 wird ein Verfahren vorgeschlagen, bei dem nach dem Endreaktor ein Teil der Polykondensationsschmelze abgezweigt und diesem Teilstrom in einem Doppelschneckenextruder AA-Reduktionsmittel wie Amide aus Polycarbonsäuren und mehrwertigen Aminen sowie Polyesterstabilisatoren wie z. B. Triethylphosphat zugegeben werden. Im gleichen Extruder werden gasförmige Reaktionsprodukte durch einen Entgasungsstutzen entfernt. Der Teilstrom wird anschließend wieder mit dem Hauptstrom vereinigt. Dieses Verfahren hat den Vorteil, dass der aufwendige Entgasungsextruder nur für einen Teilstrom der Polykondensationsschmelze ausgelegt werden muss und entsprechend billiger ist. Die grundsätzliche Notwendigkeit einer Entgasung bleibt jedoch bestehen.

Als weitere mögliche AA-Reduktionsmittel, bei deren Verwendung die SSP nicht mehr notwendig ist, werden in US 6,274,212 Verbindungen vorgeschlagen, die mindestens zwei Wasserstoff-substituierte, an Kohlenstoff gebundene Heteroatome aufweisen und bei der Reaktion mit AA im Polyester organische Verbindungen bilden, die mindestens zwei Heteroatome in einem unverbrückten 5-oder 6-gliedrigen Ring enthalten. Als eine mögliche Verbindung dieser Gruppe ist Anthranilamid genannt. Diese Additive können als Suspension z. B. auf Polyester-Granulat aufgesprüht, in Form von Masterbatch-Granulat dem Polyester-Granulat oder nach dem Aufschmelzen des Granulats der Schmelze zugemischt werden.

Die beschriebenen Verfahren haben somit den Nachteil, dass der Einsatz von teurem Trägergas für eine Schmelzeentgasung und eine zusätzliche Entgasungseinheit erforderlich ist, somit ein großer und damit teurer apparativer Aufwand betrieben werden muss und letztendlich in Abhängigkeit vom Zeitpunkt des Acetaldehyd - Scavengerzusatzes eine erneute AA-Bildung nicht in jedem Fall verhindert wird.

Der Erfindung liegt daher die Aufgabe zugrunde, ein Verfahren zur kontinuierlichen direkten Herstellung von Hohlkörpern aus aromatischen Polyestern und deren Copolymeren zur Verfügung zu stellen, das apparativ vereinfacht ist, möglichst geringe Kosten für Zusatzchemikalien verursacht und wobei gleichzeitig die besonders hohen Qualitätsansprüche an den Polyester für Hohlkörper, besonders für Behälter für die Abfüllung für Lebensmittel und insbesondere für Getränkeflaschen, wie Viskosität, Farbe und Acetaldehyd beibehalten oder sogar noch verbessert werden können.

Überraschenderweise wurde nun gefunden, dass diese Aufgabe gelöst werden kann durch ein Verfahren zur Herstellung von Formkörpern mit einem Acetaldehyd-Gehalt im Preform von maximal 8 ppm aus einer hochkondensierten Polyesterschmelze, wobei als Endreaktor ein Polykondensationsreaktor vom Typ des High Viscosity Self-cleaning Reactor (HVSR) oder vom Typ des Double-Drive Reactor eingesetzt wird, wobei die Schmelze zwischen dem Polykondensationsreaktor und den Formgebungseinheiten niemals erstarrt und zwischen Endreaktor und Formgebungseinheiten keine Entgasungseinrichtung vorhanden ist und dem Hauptschmelzstrom vor dem Eintritt in die Formgebungseinheiten eine Acetaldehyd-reduzierend wirkende Substanz oder ein Acetaldehyd-reduzierend wirkendes Substanzgemisch ein- oder maximal zwei Mal zudosiert wird.

Ein solches Verfahren hat den Vorteil, dass weder eine zusätzliche SSP-Stufe mit dazugehöriger Granuliereinrichtung, Kristallisations- und Gasaufbereitungseinheit und hohen Gaskosten noch ein in Konstruktion, Herstellung und Wartung aufwendiger Entgasungsextruder benötigt wird. Im Stand der Technik ist ein solches Verfahren nicht bekannt.

Das erfindungsgemäße Verfahren ist geeignet zur Herstellung von Formkörpern aus hochviskosen Schmelzen bestehend aus aromatischen Polyestern oder Copolyester, erhältlich aus einer oder mehreren Dicarbonsäuren bzw. deren Methylestern, wie Terephthalsäure, Isophthalsäure, Naphthalindicarbonsäure und/oder 4,4-Bisphenyldicarbonbsäure und einem oder mehreren Diolen, wie Ethylenglykol, Propylenglykol, 1,4-Butandiol, 1,4-Cyclohexandimethanol, Neopentylglykol und/oder Diethylenglykol.

Diese Ausgangsverbindungen können in an sich bekannter Weise nach dem kontinuierlichen Verfahren der Ver- oder Umesterung unter Verwendung von bekannten Katalysatoren mit einer sich anschließenden Schmelzepolykondensation in modifizierten Polykondensationsreaktoren unter Vakuum zu einer hochviskosen Polyesterschmelze verarbeitet werden. Vorzugsweise werden Polyethylenterephthalat - Homopolymere oder deren Copolymere mit einem Comonomerengehalt von kleiner 10 Massen-% verwendet.

Die Polymerschmelze wird aus dem Endreaktor über ein definiertes Rohrleitungssystem zu ihrer Verteilung direkt in die Formgebungseinheiten geleitet. Bevorzugt hat die Schmelze beim Austritt aus dem Endreaktor eine Intrinsische Viskosität (I.V.) zwischen 0,74 bis 0,85 dl/g. Da die Produktionsleistung des Endreaktors beim kurzzeitigen Ausfall einer oder mehrerer Formgebungseinheiten wegen Wartung oder Defekt nicht sofort an die geänderte Abnahmemenge angepasst werden kann, werden in einer bevorzugten Ausführungsform des erfindungsgemäßen Verfahrens bis zu 50 %, bevorzugt bis zu 20 % und besonders bevorzugt maximal 10% des Schmelzestromes über ein Produktregelventil in die Veresterungsstufe zurückgeführt. Die Ausschleusung dieses Teils der Schmelze erfolgt üblicherweise nach der Produktpumpe, die die Schmelze aus dem Endreaktor fördert. Auf dem Weg zur Veresterungsstufe wird die hochviskose Schmelze ggf. durch Zugabe von maximal 10% Ethylenglykol glykolysiert und der niedrig viskosen Schmelze in der Veresterungsstufe wieder zugeführt.

Wahlweise kann ein Teil des Hauptschmelzestroms einer Granuliereinrichtung zugeführt werden. Das so erzeugte Polyestergranulat kann beispielsweise zur Produktion von Preforms in einer Preformmaschine vom Hersteller selbst verarbeitet oder verkauft werden. Vor der Verarbeitung des so gewonnenen Granulates zu Preforms für die Herstellung von Flaschen muss lediglich eine modifizierte Trocknung, die ein Verkleben der nur geringfügig kristallisierten Chips verhindert, erfolgen.

Das soeben beschriebene Ausschleusen eines Teils der Schmelze ermöglicht auch die Einstellung des Speisedrucks für die Formgebungseinheiten unabhängig von der aktuellen Produktionsleistung des Endreaktors. Hierdurch können vor allem Schwankungen in der Schmelzeabnahme durch die Formgebungsmaschinen ausgeglichen werden.

Die Steuerung des Druckes in der Schmelzeleitung erfolgt unmittelbar vor den Formgebungseinheiten und der Druck wird zwischen 1 - 20 bar, vorzugsweise 10 ± 1 bar durch Regelung der Schmelzestromausschleusung eingestellt

Im Sinne der vorliegenden Erfindung soll als Hauptschmelzestrom der Schmelzestrom auf dem Weg zwischen Endreaktor und Formgebungseinheit bezeichnet werden. Nicht zum Hauptschmelzestrom gehören die Schmelzeströme, die nach der Ausschleusung der Veresterung und / oder der Granuliereinrichtung zugeführt werden.

Als Endreaktor kann beispielsweise ein Polykondensationsreaktor für die Herstellung von hohen Intrinsischen Viskositäten eingesetzt werden, wie er in EP 0320586 beschrieben ist. Insbesondere ist auch ein sogenannter Double-Drive-Reaktor (Hersteller: Zimmer AG), der beispielsweise in US 3,617,225 beschrieben ist, als Endreaktor geeignet.

Dieser enthält statt einer durchgehenden eine geteilte Welle, auf der die Rührelemente sitzen. Die beiden Halbwellen werden jeweils durch eigene Antriebe bewegt. Dadurch ist eine Anpassung der Drehzahl an die Reaktionsbedingungen, insbesondere an die Viskosität der Polymerschmelze, uneingeschränkt möglich.

Um die Flexibilität einer Anlage zu erhöhen, kann das Zwischenprodukt aus dem Vorkondensationsreaktor zu mindestens zwei parallel geschalteten Endreaktoren geführt werden, die unterschiedliche Formgebungseinheiten versorgen.

Dies ist beispielsweise sinnvoll, wenn Produkte erzeugt werden sollen, die sich in ihrer Endviskosität wesentlich unterscheiden. Beide Endreaktoren können dann bei unterschiedlichen Prozessbedingungen betrieben werden und die ökonomischen Vorteile einer Anlage großer Kapazität bleiben trotzdem weitestgehend erhalten. Die im Folgenden beschriebenen Ausführungsformen beziehen sich auf den Abschnitt hinter einem Endreaktor, unabhängig davon, ob nur ein oder mehrere Endreaktoren von einem Vorkondensationsreaktor versorgt werden.

Bevorzugt wird die Schmelze aus einem Endreaktor zu mindestens zwei Formgebungseinheiten geführt. Vor der ersten Aufteilung des Schmelzsstromes ist in Abhängigkeit vom Druckverlust des gesamten Schmelzetransfersystems zusätzlich zur Austragspumpe des Endreaktors gegebenenfalls eine weitere Druckerhöhungseinrichtung vorgesehen, um den kontinuierlichen Schmelzefluss zu den Formgebungseinheiten zu gewährleisten.

Der zurückzulegende Weg der Schmelze zwischen der ersten Druckerhöhungseinrichtung und den Formgebungseinheiten ist so auszulegen, dass die Gestaltung der Rohrleitungssysteme und die Entfernungen zu den Formgebungseinheiten jeweils identisch sind und somit die gesamte Schmelze einer möglichst gleichen thermischen Behandlung unterliegt. Dies wird vorzugsweise erreicht, indem die Schmelzeleitungen je nach Bedarf symmetrisch aufgeteilt werden. Bevorzugt wird innerhalb jeder Rohrleitung und vor jeder Aufteilung der sich von außen nach innen einstellende Temperaturgradient in der Schmelze nochmals über statische Mischelemente ausgeglichen. Die Mischelemente sollten dabei idealerweise so nahe wie möglich vor der jeweiligen Verzweigungsstelle liegen. Die Länge dieser statischen Mischer beträgt maximal das Ein- bis Sechsfache, bevorzugt maximal das Ein- bis Dreifache des inneren Durchmessers der Rohrleitung.

Um die Symmetrie der Schmelzeleitungen optimal zu gestalten, wird der Hauptschmelzestrom aus einem Endreaktor zweckmäßigerweise zu einer geradzahligen Anzahl von Formgebungseinheiten geführt. Besonders bevorzugt ist eine Anordnung der Formgebungseinheiten in 4er - Pakten. Das bedeutet, dass die letzte Verteilung des Hauptschmelzestromes auf vier Rohrleitungen erfolgt, die dann direkt zu jeweils einer Formgebungseinheit führen. Aus Symmetriegründen werden die vorausgehenden Schmelzeverteilungen jeweils auf zwei Rohrleitungen durchgeführt. Hieraus ergibt sich, dass für jeden Endreaktor vier oder acht oder 16 usw. Formgebungseinheiten vorgesehen werden. Die Anzahl der Aufteilungen der Schmelze richtet sich nach der Gesamtleistung der Anlage und der Einzelleistung der eingesetzten Formgebungseinheiten. Die Anzahl der aufeinander folgenden Aufteilungen kann vorteilhafterweise zwischen eins und vier liegen.

Um den Acetaldehydgehalt der Preforms niedrig zu halten, wird dem Hauptschmelzestrom vor dem Eintritt in die Formgebungseinheiten eine AA-reduzierend wirkende Substanz oder ein AA-reduzierend wirkendes Substanzgemisch ein- oder maximal zweimal zudosiert. Diese Substanz bzw. dieses Substanzgemisch soll im Folgenden aus Gründen der Übersichtlichkeit zusammenfassend als Additiv bezeichnet werden. Das Additiv wird mit Hilfe von statischen, gegebenenfalls gekühlten Mischaggregaten, die in der Rohrleitung alternierend installiert sind, in der Polymerschmelze homogen verteilt und anschließend dort die Reaktion mit den Vinylesterendgruppen des Polyesters und/oder mit dem vorhandenen Acetaldehyd eingeleitet. Das Additiv wird dem Schmelzestrom als Feststoff, Feststoffgemisch oder in Form eines Additivslurrys, d. h. als Aufschlämmung in einem Dispergiermittel zugeführt.

Das Additiv kann einzelne oder ein Gemisch von Verbindungen enthalten, die allein oder in ihrer Gesamtheit den AA-Gehalt der Polymerschmelze reduzieren. Solche Verbindungen sind aus dem beschriebenen Stand der Technik bekannt.

Das Additiv kann auch Verbindungen enthalten, die die Kettenabbruchreaktion des Polyesters weitestgehend verhindern und auf diese Weise die Bildung von AA von vornherein reduzieren. Auch Verbindungen dieser Art sind im Stand der Technik bekannt. Bevorzugt werden phosphorhaltige Verbindungen verwendet. Möglich ist beispielsweise die Verwendung von Carboxyphosphonsäureverbindungen, wie unter anderem in der DE 196 31 068, deren Offenbarungsgehalt ausdrücklich in die vorliegende Anmeldung aufgenommen wird, beschrieben. Weitere geeignete phosphorhaltige Stabilisatorverbindungen sind in der angemeldeten DE 103 37 522 genannt. Es wurde nun gefunden, dass die gleichzeitige Zugabe von Substanzen aus beiden Klassen einen besonders geringen AA-Gehalt in den Preforms zur Folge hat.

Wird das Additiv als Slurry in den Prozess eingeführt, so ist als Dispersionsmittel vorzugsweise eine auch an der Polykondensationsreaktion beteiligte Verbindung, wie z. B. Ethylenglykol im Falle eines Polyethylenterephtalat-Prozesses, zu verwenden. Der Additivslurry kann weitere gewünschte Substanzen, wie z. B. Farbstoffe, UV-Absorber, Sauerstoff- und Kohlendioxidscavenger enthalten.

Das Additiv wird mittels im Stand der Technik bekannter Additivzugabeeinheiten in die Polyesterschmelze eingebracht. Geeignete Vorrichtungen sind z. B. in der DE 198 41 376, der 198 51 948 und der DE 100 49 617 beschrieben, aber auch andere für diesen Zweck geeignete Vorrichtungen sind einsetzbar. Wichtig für die erfolgreiche Anwendung der Erfindung ist in jedem Fall eine kurze Verweilzeit der Schmelze zwischen dem Endreaktor und den Formgebungseinheiten sowie eine gleichmäßige Verteilung der Additive in der Schmelze, wobei u. a. Toträume vermieden werden müssen.

Es ist zweckmäßig, eine erste Additivzugabeeinheit in der Schmelzeleitung nach der Produktaustragspumpe des Endreaktors vor der ersten Schmelzeverteilung anzuordnen.

Mit der Zugabe des Additivs an dieser Stelle wird der Acetaldehydgehalt auf maximal 25 ppm, vorzugsweise 8 ppm und besonders bevorzugt kleiner 4 ppm im Preform gesenkt. Falls erforderlich, können diese Konzentrationen durch eine weitere Additivzugabe unmittelbar vor der Formgebungsmaschine erreicht werden. Eine bevorzugte Ausführungsform der Erfindung enthält daher eine zusätzliche Additivzugabeeinheit nach dem letzten Schmelzeverteiler und vor der jeweiligen Formgebungseinheit. Damit kann an zwei im Hauptschmelzestrom hintereinanderliegenden Stellen ein Additiv zugegeben werden. Die zudosierten Mengen an Additiven können dadurch den Erfordernissen, beispielsweise der während des Schmelzetransportes neu gebildeten Menge an Acetaldehyd, angepasst werden. Zusätzlich können hier beispielsweise Farben, UV-Stabilisatoren, Zusätze zur Verbesserung der Barriereeigenschaften oder zur Erhöhung der thermischen Stabilität und ähnliches eindosiert werden. Eine Einarbeitung und gleichmäßige Verteilung dieser Substanzen erfolgt sowohl über statische Mischelemente als auch über die Mischstrecke in der Formgebungsmaschine. Dieses System erlaubt beispielsweise die Herstellung von Preforms für Flaschen unterschiedlichster Anforderungen.

In einer weiteren, bevorzugten Ausgestaltung des erfindungsgemäßen Verfahrens wird mittels der ersten Additivzugabeeinheit ein Additiv zugegeben, das sowohl einen Stabilisator und als auch eine AA-reduzierende Substanz enthalten kann. Durch den Zusatz eines Stabilisators werden die bei Verwendung von stickstoffhaltigen AA-reduzierenden Substanzen möglicherweise auftretenden Verfärbungen des Polyesters gering gehalten. Besonders bevorzugt wird dabei der Stabilisator aus der Gruppe der Carboxyphosphonsäuren ausgewählt.

Um den AA-Gehalt im Formkörper wirksam kontrollieren zu können, muss die Verweilzeit der Schmelze zwischen der letzten Additivzugabestelle und dem Eintritt in die Formgebungseinheit möglichst kurz sein. Als vorteilhaft hat es sich erwiesen, diese Strecke so zu gestalten, daß die mittlere Verweilzeit kürzer als sechs Minuten, bevorzugt kürzer als zwei Minuten ist.

Die Menge der zu dosierenden Additive ist abhängig von der AA-Grundlast aus der Polykondensation, der Verweilzeit und Temperatur in der Schmelzeleitung und der gewünschten Endkonzentration im Formkörper. Je länger die Verweilzeit der Schmelze in der Schmelzeleitung ist, desto höher ist die benötigte Additivmenge.

Die mittlere Verweilzeit der Schmelze zwischen Endreaktor und Eintritt in die Formgebungseinheit darf dabei nicht beliebig groß sein. Sie wird jedoch bei zunehmender Kapazität des Endreaktors zwangsläufig größer, da die Schmelze dann auf eine größere Zahl von Formgebungseinheiten verteilt wird, was eine größere Zahl von Verzweigungsstufen sowie insgesamt längere Schmelzeleitungen erfordert.

In jedem Fall ist es vorteilhaft, wenn die mittlere Verweilzeit der Schmelze zwischen Endreaktor und Eintritt in die Formgebungseinheit maximal 30 Minuten, vorzugsweise maximal 15 Minuten, besonders bevorzugt maximal 12 Minuten beträgt.

Zur Vermeidung der Ausbildung eines Temperaturgradienten und einem verstärkten punktuellen Abbau der Schmelze werden statische Mischer in alternierender Anordnung eingesetzt, die der antizyklischen Durchmischung der randgängigen Polymerschmelze mit der Kernschmelze entgegenwirken.

Um eine möglichst kurze Verweilzeit der Schmelze zwischen Endreaktor und Formgebungseinheit zu erreichen, sind die statischen Mischer so kurz wie möglich ausgeführt. Vorzugsweise beträgt ihre Länge maximal das Sechsfache, bevorzugt maximal das Dreifache des inneren Durchmessers des Rohrstücks, in das sie eingebaut sind.

Die heute üblichen Preformmaschinen sind so konstruiert, dass der Maschinenteil, in den die Schmelze eintritt, zur Reinigung und Wartung häufig, beispielsweise mindestens einmal täglich aus seiner Arbeitsposition in eine Wartungsposition bewegt werden muss. Dies ist problemlos möglich, wenn die Preformmaschine mit Polymergranulat versorgt wird und einen Aufschmelzextruder enthält. Im erfindungsgemäßen Verfahren wird jedoch hochviskose Polymerschmelze in einem starren Doppelmantelrohr der Formgebungseinheit zugeführt. Um eine geeignete Verbindung zwischen der letzten Additivzugabeeinheit und der verfahrbaren Maschine herzustellen, wird erfindungsgemäß eine flexible Rohrleitung, z.B. eine Rohrgelenkschere als permanente Verbindung zwischen der starren Schmelzeleitung und der verfahrbaren Maschine eingesetzt. Durch die Rohrgelenkschere wird eine horizontale Bewegung von maximal 100 cm, vorzugsweise maximal 50 cm und besonders bevorzugt maximal 30 cm ausgeglichen. Dabei kann die Rohrgelenkanordnung horizontal liegend mit senkrechten Drehachsen oder vertikal angeordnet mit horizontalen Drehachsen ausgestaltet werden.

Am Übergang zur Preformmaschine ist ein konstanter Druck zur Verfügung zu stellen. Um eine konstante Schmelzezuführung zur Maschine zu gewährleisten, ist ein Druck zwischen 1 und 20 bar, vorzugsweise 10 ± 1 bar, einzustellen. Diese Druckeinstellung erfolgt erfindungsgemäß durch die Regelung der Abführung von Überschussschmelze zurück zur Veresterungsstufe und / oder zur Granuliereinrichtung. Die Druckmessung erfolgt unmittelbar vor den Preformmaschinen. Die bevorzugte Schmelzetemperatur liegt zwischen 280 und 285 °C

Die Figur zeigt ein Ausführungsbeispiel des erfindungsgemäßen Verfahrens und der erfindungsgemäßen Vorrichtung, ohne die Erfindung auf diese Ausführungsform einzuschränken.

Das Präpolymer aus einem Vorkondensationsreaktor wird im Endreaktor 1, beispielsweise vom Typ HVSR oder Double-Drive auf die gewünschte Viskosität hochkondensiert und mittels der Austragspumpe 2 ausgetragen. Nach Durchleitung durch ein statisches 3 x 3D-Mischelement wird dem Schmelzestrom über eine erste Additivzugabeeinheit die gewünschte Menge an Additiv und gegebenenfalls weiteren Substanzen zugegeben und durch ein anschließendes statisches 15D-Mischelement darin gleichmäßig verteilt. Abhängig vom Druckverlust in der Schmelzeverteilung bis zu den Preformmaschinen kann zur Druckerhöhung eine Boosterpumpe 5 eingesetzt werden. Die Regelung des Speisedrucks vor den Preformmaschinen erfolgt durch Messung mitttels Druckaufnehmer PC und Ausschleusung eines Teils des Hauptschmelzestroms über die geregelte Ausschleusungspumpe 6 zu einem Granulator 7. In ähnlicher Weise kann mittels einer zweiten, nicht dargestellten Ausschleusungspumpe ein Teil der ausgeschleusten Schmelze in die ebenfalls nicht dargestellte Veresterungsstufe zurückgeführt werden. Der Hauptschmelzestrom wird durch mehrere Schmelzeaufteilungen zu den Preformmaschinen geleitet, wobei sich vor jeder Aufteilung ein statischer Mischer 8 befindet. Nach der letzten Aufteilung werden der Polymerschmelze mittels einer zweiten Additivzugabeeinheit A2 nochmals Additiv und gegebenenfalls weitere Substanzen zudosiert, in einer nachgeschalteten Mischstrecke 8 homogenisiert und über eine nicht dargestellte Rohrdrehgelenkschere in die Preformmaschine geleitet.

**Beispiele**

Die Erfindung wird nunmehr anhand einiger, in keiner Weise einschränkender Ausführungsbeispiele näher beschrieben. Die angegebenen Eigenschaftswerte wurden hierbei wie folgt ermittelt:

Die Intrinsic-Viskosität (I.V.) wurde bei 25 °C an einer Lösung von 500 mg Polyester in 100 ml eines Gemisches aus Phenol und 1,2-Dichlorbenzol (3:2 Gew.-Teile) gemessen.

Die COOH-Endgruppenkonzentration wurde mittels photometrischer Titration mit 0,05 m ethanolischer Kalilauge gegen Bromthymolblau einer Lösung eines Polyesters in einem Gemisch aus o-Kresol und Chloroform (70:30 Gew.-Teile) bestimmt.

Die Messung der Farbwerte L und b erfolgte nach HUNTER. Die Polyesterchips wurden zunächst im Trockenschrank bei 135 ± 5 °C während einer Stunde kristallisiert. Die Farbwerte wurden danach ermittelt, indem in einem Dreibereichfarbmeßgerät der Farbton der Polyesterprobe mit drei Fotozellen, denen je ein Rot-, Grün- und Blaufilter vorgeschaltet war, gemessen wurde (X-, Y- und Z-Werte): Die Auswertung erfolgte nach der Formel von HUNTER, wobei

$$L = 10 \sqrt{Y}$$

und

$$b = \frac{7{,}0}{\sqrt{Y}\,(Y - 0{,}8467\,Z)}$$

ist.

Der Acetaldehyd wurde durch Erhitzen in einem geschlossenen Gefäß aus Polyester ausgetrieben und der Acetaldehyd im Gasraum des Gefäßes gaschromatographisch mit dem Head space-Injektionssystem H540, Perkin Elmer; Trägergas: Stickstoff; Säule: 1,5 m Edelstahl; Füllung: Poropack Q, 80 - 100 mesh; Probemenge: 2g; Heiztemperatur: 150 °C. Heizdauer: 90 min. bestimmt.

Das Produkt wird eingewogen und von einer Anfangstemperatur um 35 °C mit einer Heizrate von 10 K / min auf 300 °C erwärmt und anschließend der Schmelzpunkt und die für den Aufschmelzvorgang benötigte Schmelzenergie ermittelt.

Die hochviskose Polyethylenterephthalatschmelze für die in den Beispielen beschriebenen Versuche wurde in einem kontinuierlich arbeitenden Polykondensationsreaktor vom Typ HVSR (High Viscosity Self-cleaning Reactor) hergestellt, wie er beispielsweise in EP 0 320 586 beschrieben ist. Dieser Reaktor weist eine innen liegende Welle mit speziell geformten beheizbaren Paddeln auf und eingebaute Statoren, die regelmäßig die an der Welle und den Wandflächen anhaftende hochviskose Schmelze erneut in den Prozess zurückführen. Ausgegangen wurde von einem marktüblichen Granulat zur Herstellung von Flaschen zur Befüllung mit Fruchtsäften mit Kohlensäure mit einer I.V. von 0.62 dl/g. Das Granulat wurde getrocknet und in einem Einschneckenextruder der Fa. Hussmann aufgeschmolzen, kontinuierlich dem HVSR zugeführt und dort mit einem Durchsatz von etwa 20 kg / h bei einem Druck von 0,1 - 0,5 mbar und Temperaturen von 275 °C - 280 °C bis zu einer Viskosität von 0,80 - 0,84 dl/g, Acetaldehydwerten von etwa 30 ppm und b-Farben von - 3 bis -4 schonend aufkondensiert. Mittels einer Zahnradpumpe wurde dieses Produkt über die mit statischen Mischelementen des Typs SMX der Fa. Sulzer ausgestattete Schmelzeleitung direkt der modifizierten Preformmaschine XL 160 mit modifizierter Mischstrecke mit einem 2-Kavitäten-Werkzeug, mit dem gleichzeitig zwei Preforms geformt werden können, kontinuierlich zugeführt und zu Preforms verarbeitet.

Zur Erfüllung der unterschiedlichen Anforderungen wurde in den Versuchen die Anzahl der Mischelemente variiert, wobei die Länge eines Mischelementes immer dem Rohrleitungsdurchmesser (= 1 D) entsprach. Zum Ausgleich des Temperaturgradienten zwischen Rand- und Kernschmelze wurden alternierend 3 x 3D-Mischelemente über die Rohrleitungslänge und zur gleichmäßigen Verteilung der Additive 15D-Mischelemente nach der ersten Additivzugabe in die Schmelzeleitung eingesetzt. Bei einer zweiten Additivzugabe in die Schmelzeleitung unmittelbar vor der beweglichen Drehgelenkschere, in welcher die Rohrgelenkanordnung horizontal liegend mit senkrechten Drehachsen vorlag, erfolgte nur noch eine Vorvermischung der Additive mittels 3D Mischelementen. Die statistische Verteilung der Additive wurde erst in der modifizierten Mischstrecke in der Preformmaschine erreicht.

Während der Versuche wurden die Schmelzemengen für die Preformmaschine zwischen 90 % bis 72 % der vom Endreaktor kommenden Menge durch Anpassung des Fahrregimes der Preformmaschine variiert. Dabei wurde die Versorgung der Preformmaschine mit Schmelze durch Einstellungen des Druckes vor der Maschine sichergestellt. Die Steuerung des Druckes erfolgte durch Regelung der Schmelzeausschleusung aus dem Hauptstrom nach der ersten Additivierung mittels einer Zahnradpumpe. Der ausgeschleuste Teil der Schmelze wurde in einem Granulator zu Chips verarbeitet. Diese Chips wurden anschließend in einem Kristallisator unter Stickstoff als Trägergas getrocknet, kristallisiert und zu Preforms weiter verarbeitet.

Zur Ermittlung der Produktqualität wurden das Granulat und die Preforms (gemahlen unter Stickstoffatmosphäre) nach den beschriebenen Methoden im Labor auf die wichtigsten Qualitätskriterien untersucht.

Die Dosierung der eingesetzten Additive, Stabilisatoren und Farbstoffe erfolgte über Seitenstromextruder der Fa. Hussmann in Kombination mit Zahnradpumpen. Es wurden handelsübliche Additive sowohl in flüssiger als auch in fester Form während der Versuche getestet.

Die wesentlichen Prozessparameter und Qualitäten werden in den nachstehenden Tabellen 1 bis 3 beschrieben. Dabei bezeichnet D den Durchmesser der Schmelzeleitung, L die Länge der Schmelzeleitung, L/D das Verhältnis der Länge und des Durchmessers der Schmelzeleitung, $t_1$ die Verweilzeit in der Schmelzeleitung bis zum 2. Additivsystem, $t_2$ die Verweilzeit der Schmelze zwischen dem 2. Additivsystem und dem Eintritt in die Preformmaschine, p den Prozessdruck der Schmelze am Ende der Schmelzeleitung und T die Schmelzetemperatur beim Verlassen der Rohrgelenkschere. Unter Zugabe 1 bzw. Zugabe 2 sind die zudosierten Mengen an Additiv und sonstigen Substanzen an den Additivdosiereinheiten 1 bzw. 2 genannt. Hierbei bezeichnet AA einen Acetaldehyd-Scavenger der Firma Coca-Cola®, P den Stabilisator H-MOD der Firma Rhodia und D den Farbstoff Estofil Blue der Firma Clariant.

Die Polyesterschmelze hatte am Ausgang des HVSR die folgenden Eigenschaften: I.V. = 0,83 dl/g, COOH-Gehalt = 22 mmol/kg, AA-Gehalt = 32 ppm, Farbe b = -3 units.

**Tabelle 1**

| Versuch | Einheit | 1 | 2 | 3 | 4 | 5 | 6 | 7 |
|---|---|---|---|---|---|---|---|---|
| Durchsatz gesamt | kg/h | 20 | 20 | 20 | 20 | 20 | 20 | 20 |
| Durchsatz Preformmaschine | kg/h % | 18 90 | 18 90 | 18 90 | 18 90 | 18 90 | 18 90 | 18 90 |
| D | mm | 20 | 20 | 20 | 20 | 20 | 20 | 20 |
| L | m | 5 | 5 | 5 | 5 | 10 | 10 | 10 |
| L/D | | 250 | 250 | 250 | 250 | 500 | 500 | 500 |
| $t_1$ | min | 5,5 | 5,5 | 5,5 | 5,5 | 11 | 11 | 11 |
| $t_2$ | sec | 285 | 285 | 285 | 285 | 285 | 285 | 285 |
| p | bar | 20 | 20 | 20 | 20 | 20 | 20 | 20 |
| T | °C | 282 | 282 | 282 | 282 | 284 | 284 | 284 |
| AA-Zugabe 1 | ppm | ohne | 1000 AA | 1000 AA | 1000 AA 15P | 1000 AA 15P | 1000 AA 15P | ohne |

(fortgesetzt)

| Versuch | Einheit | 1 | 2 | 3 | 4 | 5 | 6 | 7 |
|---|---|---|---|---|---|---|---|---|
| AA-Zugabe 2 | ppm | ohne | ohne | 500 AA | 500 AA | 500 AA | 500 AA 0,5 D | ohne |
| Preform: | | | | | | | | |
| I.V. | dl/g | 0,80 | 0,79 | 0,785 | 0,795 | 0,785 | 0,78 | 0,79 |
| COOH | mmol/k g | 32 | 33 | 35 | 33 | 34 | 39 | 37 |
| AA | ppm | 53 | 6,5 | 2,5 | 2,0 | 3,0 | 6,0 | 64 |
| Farbe b | unit | 0,8 | 2,5 | 3,0 | 0 | 0,5 | 0,2 | 5,5 |

**Tabelle 2**

| Versuch | Einheit | 8 | 9 | 10 | 11 | 12 | 13 |
|---|---|---|---|---|---|---|---|
| Durchsatz gesamt | kg/h | 20 | 20 | 20 | 20 | 20 | 20 |
| Durchsatz Preformmaschine | kg/h % | 18 90 | 14,4 72 | 18 90 | 18 90 | 18 90 | 18 90 |
| D | mm | 20 | 20 | 25 | 25 | 25 | 25 |
| L | m | 5 | 5 | 5 | 10 | 15 | 15 |
| L/D | | 250 | 250 | 200 | 400 | 600 | 600 |
| $t_1$ | min | 5,5 | 5,5 | 8,6 | 17,2 | 26 | 26 |
| $t_2$ | sec | 285 | 350 | 285 | 285 | 285 | 285 |
| p | bar | 20 | 20 | 20 | 20 | 20 | 20 |
| T | °C | 282 | 282 | 283 | 284,5 | 286 | 286 |
| AA-Zugabe 1 | ppm | 1000 AA 15 P | 1000 AA 15 P | ohne | ohne | ohne | 1500 AA 25 P |
| AA-Zugabe 2 | ppm | 500 AA | 500 AA | ohne | ohne | ohne | 500 AA |
| Preform: | | | | | | | |
| I.V. | dl/g | 0,793 | 0,796 | 0,80 | 0,78 | 0,775 | 0,76 |
| COOH | mmol/kg | 34 | 33 | 34 | 40 | 45 | 46 |
| AA | ppm | 1,9 | 2,8 | 61 | 80 | 95 | 8,5 |
| Farbe b | unit | 0,3 | 0,9 | 1,3 | 5,7 | 5,9 | 3,4 |

Aus den Ergebnissen der Versuche 1 - 7 wurde deutlich der Einfluss unterschiedlicher Verweilzeiten auf den Abbau durch abfallende IV, Carboxylendgruppen und dem Anstieg der b-Farbe in den Preforms erkennbar. Eine zusätzliche abbauende Wirkung war auch durch den Einsatz der Acetaldehydscavenger erkennbar, die jedoch mit dem Einbringen einer stabilisierenden Verbindung in das erste Additivsystem beinahe wieder ausgeglichen werden konnte. Der Acetaldehydgehalt in den Preforms konnte wirksam auf die üblichen vom Markt akzeptierten Konzentrationen unter 8 ppm abgesenkt werden. Zur Verbesserung der Farbe trug bereits eine sehr geringe Additivierung mit Blaufarbstoff in einer Konzentration von 0,5 ppm bei.

In den Versuchen 8 und 9 wurde festgestellt, dass sich die Verlängerung der Schmelzeverweilzeit zwischen dem zweiten Additivsystem und dem Eintritt in die Preformmaschine trotz Zugabe einer stabilisierenden Verbindung gemeinsam mit dem Scavenger in das erste Additivsystem geringfügig verschlechternd auf die Preformqualität auswirkte.

In den Versuchen 10 bis 12 wurden weitere Verweilzeiterhöhungen durch die Vergrößerung der Nennweiten der schmelzeführenden Rohrleitungen untersucht, die mit einer Temperaturerhöhung in der Schmelze einhergingen. Dieses führte zu einer weiteren Qualitätsverschlechterung einhergehend mit einem Anstieg der Basisacetaldehydgehalte (Acetaldehydwerte ohne Scavengerzugabe). Zur Kompensation wurde die Scavengerzugabe bei der ersten Additivierung auf 150% und die Stabilisatorkonzentration um 10 ppm Phosphoranteil angehoben. Die zu erwartende Qualitäts-

minerung, bezogen auf die wesentlichen Qualitätsmerkmale des Polymers, konnte mit diesen Gegenmassnahmen nicht vollständig eliminiert werden. Der Acetaldehydgehalt im Preform stieg auf 8,5 ppm.

Alle hergestellten Preforms aus den Versuchen 2-6, 8-9 und 13 wurden problemlos an einer Laborflaschenblasmaschine mit einem Werkzeug der Fa. SI-DEL LBO 01 zu 0,5 I-Contour-Flaschen unter Standardeinstellungen verarbeitet. Die Qualität der Flaschen entsprach den Marktanforderungen.

Das in den Versuchen anfallende Granulat wurde in einem Wirbelbettkristallisator der Fa. Vibra 30 min bei Temperaturen zwischen 190 bis 205 °C unter Stickstoff als Trägergas kristallisiert und weiter entaldehydisiert, anschließend in einem üblichen Challengertrockner 4 Stunden bei 170 °C verklebungsfrei getrocknet und in einer Laborpreformmaschine mit 2 Kavitätenwerkzeug der Fa. Husky zu 28g Preforms mit einen AA-Gehalt zwischen 5 - 6 ppm verarbeitet.

## Patentansprüche

1. Verfahren zur Herstellung von Formkörpern mit einem AcetaldehydGehalt im Preform von maximal 8ppm aus einer hochkondensierten Polyesterschmelze, wobei als Endreaktor ein Polykondensationsreaktor vom Typ des High Viscosity Self-cleaning Reactor (HVSR) oder vom Typ des Double-Drive Reactor eingesetzt wird, **dadurch gekennzeichnet, dass** die Schmelze zwischen dem Polykondensationsreaktor und den Formgebungseinheiten niemals erstarrt und zwischen Endreaktor und Formgebungseinheiten keine Entgasungseinrichtung vorhanden ist und dem Hauptschmelzestrom vor dem Eintritt in die Formgebungseinheiten eine Acetaldehyd-reduzierend wirkende Substanz oder ein Acetaldhyd-reduzierend wirkendes Substanzgemisch ein- oder maximal zweimal zudosiert wird.

2. Verfahren nach Anspruch 1, **dadurch gekennzeichnet, dass** 50 - 100 % der aus dem Endreaktor austretenden Schmelze in die Formgebungseinheiten eintreten.

3. Verfahren nach einem der Ansprüche 1 bis 2, **dadurch gekennzeichnet, dass** die Einstellung des Speisedrucks für die Formgebungseinheiten durch Ausschleusen eines Teils der Schmelze erfolgt.

4. Verfahren nach einem der Ansprüche 1 bis 3, **dadurch gekennzeichnet, dass** die Steuerung des Druckes in der Schmelzeleitung unmittelbar vor den Formgebungseinheiten erfolgt und der Druck zwischen 1 - 20 bar, vorzugsweise $10 \pm 1$ bar durch Regelung der Schmelzestromausschleusung eingestellt wird.

5. Verfahren nach einem der Ansprüche 1 bis 4, **dadurch gekennzeichnet, dass** der ausgeschleuste Teil der Schmelze zurück in die Veresterungsstufe und wahlweise auch zu einer Granuliereinrichtung geführt wird.

6. Verfahren nach einem der Ansprüche 1 bis 5, **dadurch gekennzeichnet, dass** zwischen 0 und 50 % der aus dem Endreaktor austretenden Schmelze in die Veresterungsstufe und zu einer Granuliereinrichtung zurückgeführt werden.

7. Verfahren nach einem der Ansprüche 1 bis 6, **dadurch gekennzeichnet, dass** maximal 20%, vorzugsweise maximal 10% der aus dem Endreaktor austretenden Schmelze in die Veresterungsstufe zurückgeführt wird.

8. Verfahren nach einem der Ansprüche 1 bis 7, **dadurch gekennzeichnet, dass** der in die Veresterungsstufe zurückgeführten hochviskosen Schmelze maximal 10% Ethylenglykol zugeführt wird.

9. Verfahren nach einem der Ansprüche 1 bis 8, **dadurch gekennzeichnet, dass** mindestens zwei Endreaktoren parallel eingesetzt werden, die unterschiedliche Formgebungseinheiten versorgen.

10. Verfahren nach einem der Ansprüche 1 bis 9, **dadurch gekennzeichnet, dass** die Schmelze aus einem Endreaktor zu mindestens zwei Formgebungseinheiten geführt wird.

11. Verfahren nach einem der Ansprüche 1 bis 10, **dadurch gekennzeichnet, dass** vor der ersten Schmelzeverteilung mindestens eine Druckerhöhungspumpe eingesetzt wird.

12. Verfahren nach einem der Ansprüche 1 bis 11, **dadurch gekennzeichnet, dass** der Hauptschmelzestrom aus einem Endreaktor zu einer geradzahligen Anzahl von Formgebungseinheiten geleitet wird.

13. Verfahren nach einem der Ansprüche 1 bis 12, **dadurch gekennzeichnet, dass** dem Schmelzestrom vor dem Eintritt in die Formgebungseinheit eine Substanz oder ein Substanzgemisch als Feststoff oder als Slurry zugegeben wird.

14. Verfahren nach einem der Ansprüche 1 bis 13, **dadurch gekennzeichnet, dass** nach der ersten Druckerhöhungspumpe eine Additivzugabeeinheit vorhanden ist.

15. Verfahren nach einem der Ansprüche 1 bis 14, **dadurch gekennzeichnet, dass** in der Schmelzeleitung nach dem letzten Schmelzeverteiler und vor jeder Formgebungseinheit eine Additivzugabeeinheit angeordnet ist.

16. Verfahren nach einem der Ansprüche 1 bis 15, **dadurch gekennzeichnet**, der Schmelze mittels der nach dem letzten Schmelzeverteiler angeordneten Additivzugabeeinheiten vor unterschiedlichen Preformmaschinen unterschiedliche Additive und/oder unterschiedliche weitere Substanzen zugegeben werden.

17. Verfahren nach einem der Ansprüche 1 bis 16, **dadurch gekennzeichnet, dass** die mittlere Verweilzeit der Schmelze zwischen der letzten Additivzugabeeinheit und dem Eintritt in die Formgebungseinheit maximal 6 Minuten, bevorzugt maximal 2 Minuten beträgt.

18. Verfahren nach einem der Ansprüche 1 bis 17, **dadurch gekennzeichnet, dass** nach der ersten Additivzugabeeinheit ein statisches Mischelement mit einer Mindestlänge von 15D in der Schmelzeleitung eingesetzt ist.

19. Verfahren nach einem der Ansprüche 1 bis 18, **dadurch gekennzeichnet, dass** nach der zweiten Additivzugabeeinheit in die Schmelzeleitung unmittelbar vor der beweglichen Drehgelenkschere, in welcher die Rohrgelenkanordnung horizontal liegend mit senkrechten Drehachsen vorlag, ein statisches Mischelement mit einer Mindestlänge von 3D in der Schmelzeleitung eingesetzt ist.

20. Verfahren nach einem der Ansprüche 1 bis 19, **dadurch gekennzeichnet, dass** das Additiv mindestens eine phosphorhaltige Verbindung enthält.

21. Verfahren nach einem der Ansprüche 1 bis 20, **dadurch gekennzeichnet, dass** das Additiv mindestens eine Acetaldehyd-reduzierende Substanz enthält.

22. Verfahren nach einem der Ansprüche 1 bis 22, **dadurch gekennzeichnet, dass** die mittlere Verweilzeit der Schmelze zwischen Endreaktor und Eintritt in die Formgebungseinheit maximal 30 Minuten, bevorzugt maximal 15 Minuten und besonders bevorzugt 12 Minuten beträgt.

23. Verfahren nach einem der Ansprüche 1 bis 22, **dadurch gekennzeichnet, dass** die Schmelzeleitung zwischen der letzten Additivzugabeeinheit und dem Eintritt in die Formgebungseinrichtung eine horizontale Bewegung der Formgebungseinrichtung um mindestens 100 cm, bevorzugt mindestens 50 cm, besonders bevorzugt maximal 30 cm durchführen kann.

24. Verfahren nach einem der Ansprüche 1 bis 23, **dadurch gekennzeichnet, dass** die Schmelzeleitung für einen Betriebsdruck von maximal 200 bar und maximal 320°C, bevorzugt 280 - 285 °C ausgelegt ist.

25. Verfahren zur Herstellung von Formkörpern aus einer hochkondensierten Polyesterschmelze, **dadurch gekennzeichnet, dass**

- 50 bis 100 % der aus dem Endreaktor austretenden Schmelze in die Formgebungseinheiten eintreten,
- der ausgeschleuste Teil der Schmelze zurück in die Veresterungsstufe und wahlweise auch zu einer Granuliereinrichtung geführt wird,
- der Hauptschmelzestrom zu einer geradzahligen Anzahl von Formgebungseinheiten geleitet wird,
- in der Schmelzeleitung nach dem letzten Schmelzeverteiler und vor jeder Formgebungseinheit eine Additivzugabeeinheit angeordnet ist,
- dem Hauptschmelzestrom vor dem Eintritt in die Formgebungseinheit mindestens eine Acetaldehyd-reduzierende Substanz oder mindestens ein Acetaldehyd-reduzierendes Substanzgemisch als Feststoff oder Dispersion zugegeben wird und
- die Schmelze zwischen dem/n Polykondensationsreaktor/en und den Formgebungseinheiten niemals erstarrt und zwischen Endreaktor und Formgebungseinheit keine Entgasungseinrichtung vorhanden ist.

26. Vorrichtung zur Herstellung von Formkörpern aus einer hochkondensierten Polyesterschmelze, wobei die Schmelze zwischen dem Polykondensationsreaktor und den Formgebungseinheiten niemals erstarrt und zwischen Endreaktor und Formgebungseinheiten keine Entgasungseinrichtung vorhanden ist, **dadurch gekennzeichnet, dass** in der Schmelzeleitung zwischen dem Polykondensationsreaktor und einer Formgebungseinheit mindestens zwei Additivzugabeeinheiten angeordnet sind.

27. Vorrichtung nach Anspruch 26, **dadurch gekennzeichnet, dass** die parallel angeordneten Rohrleitungen zur Förderung des Hauptschmelzestromes zu den Formgebungseinheiten jeweils das gleiche Design aufweisen.

28. Vorrichtung nach einem der Ansprüche 27, **dadurch gekennzeichnet, dass** zur Vergleichmäßigung der Schmelze statische Mischer, deren Länge maximal das Ein- bis Sechsfache, bevorzugt maximal das Ein- bis Dreifache des inneren Durchmessers der Rohrleitung betragen, alternierend, mindestens aber vor jeder Rohrleitungsaufteilung eingesetzt werden.

29. Vorrichtung nach einem der Ansprüche 27 bis 28, **dadurch gekennzeichnet, dass** die Rohrleitung zwischen der letzten Additivzugabeeinheit und der Formgebungseinheit so flexibel ist, dass sie eine horizontale Bewegung der Formgebungseinheit erlaubt.

30. Vorrichtung nach einem der Ansprüche 27 bis 29, **dadurch gekennzeichnet, dass** die flexible Rohrleitung eine Rohrgelenkschere enthält, deren Gelenke entweder nur vertikale oder nur horizontale Drehachsen aufweisen, für den permanenten Anschluss zwischen der starren Schmelzeleitung und der Formgebungseinheit eingesetzt wird.

31. Vorrichtung nach einem der Ansprüche 27 bis 30, **dadurch gekennzeichnet, dass** die Schmelzeleitung zwischen der letzten Additiveinheit und der Formgebungseinheit eine horizontale Bewegung der Formgebungseinheit um maximal 100 cm, bevorzugt maximal 50 cm, besonders bevorzugt maximal 30 cm ermöglicht.

32. Vorrichtung nach Anspruch 26, **dadurch gekennzeichnet, dass** die Rohrleitung zwischen der letzten Additivzugabeeinheit und der Formgebungseinheit eine Rohrdrehgelenkschere enthält, die eine horizontale Bewegung der Formgebungseinheit erlaubt.

**Claims**

1. A method for the manufacture of moulded bodies with an acetaldehyde content in the preform of a maximum of 8ppm of a highly condensed polyester melt, wherein a polycondensation reactor of the type of high viscosity self-cleaning reactor (HVSR) or of type double-drive reactor is employed as end reactor, **characterized in that** the melt between the polycondensation reactor and the moulding units never solidifies and no degassing device is present between end reactor and moulding units and a substance acting in an acetaldehyde-reducing manner or a substance compound acting in an acetaldehyde-reducing manner is measured out and added once or twice to the main melt flow prior to entry in the moulding units.

2. The method according to claim 1, **characterized in that** 50 - 100% of the melt issuing from the end reactor enters the moulding units.

3. The method according to any one of the claims 1 to 2, **characterized in that** the setting of the feed pressure for the moulding units takes place through diverting a part of the melt.

4. The method according to any one of the claims 1 to 3, **characterized in that** the control of the pressure in the melt line takes place directly in front of the moulding units and the pressure is set between 1 - 20 bar, preferably $10 \pm 1$ bar through control of the melt flow diversion.

5. The method according to any one of the claims 1 to 4, **characterized in that** the diverted part of the melt is conveyed back to the esterification stage and optionally also to a granulating device.

6. The method according to any one of the claims 1 to 5, **characterized in that** between zero and 50% of the melt issuing from the end reactor is returned to the esterification stage and to a granulating device.

7. The method according to any one of the claims 1 to 6, **characterized in that** a maximum of 20%, preferably a maximum of 10% of the melt issuing from the end reactor is returned to the esterification stage.

8. The method according to any one of the claims 1 to 7, **characterized in that** a maximum of 10% of ethylene glycol is added to the highly viscous melt returned to the esterification stage.

9. The method according to any one of the claims 1 to 8, **characterized in that** at least two end reactors are employed in parallel, which supply different moulding units.

10. The method according to any one of the claims 1 to 9, **characterized in that** the melt from an end reactor is led to at least two moulding units.

11. The method according to any one of the claims 1 to 10, **characterized in that** at least a pressure boosting pump is employed upstream of the first melt distribution unit.

12. The method according to any one of the claims 1 to 11, **characterized in that** the main melt flow from an end reactor is directed to an even number of moulding units.

13. The method according to any one of the claims 1 to 12, **characterized in that** a substance or a substance mixture is added as solid material or slurry to the melt flow prior to entry in the moulding unit.

14. The method according to any one of the claims 1 to 13, **characterized in that** an additive adding unit is present downstream of the first pressure boosting pump.

15. The method according to any one of the claims 1 to 14, **characterized in that** an additive adding unit is arranged in the melt line downstream of the last melt distributor and upstream of each moulding unit.

16. The method according to any one of the claims 1 to 15, **characterized in that** different additives and/or different additional substances are added to the melt by means of additive adding units arranged downstream of the last melt distribution unit upstream of a variety of preforming machines.

17. The method according to any one of the claims 1 to 16, **characterized in that** the mean dwell time of the melt between the last additive adding unit and the entry in the moulding unit is a maximum of six minutes, preferably a maximum of two minutes.

18. The method according to any one of the claims 1 to 17, **characterized in that** a static mixing element with a minimum length of 15D is inserted in the melt line downstream of the first additive adding unit.

19. The method according to any one of the claims 1 to 18, **characterized in that** downstream of the second additive adding unit a static mixing element with a minimum length of 3D is inserted in the melt line immediately upstream of the movable scissors-type joint in which the pipe joint arrangement was present horizontally positioned with vertical fulcrums.

20. The method according to any one of the claims 1 to 19, **characterized in that** the additive contains at least a compound containing phosphorus.

21. The method according to any one of the claims 1 to 20, **characterized in that** the additive contains at least an acetaldehyde-reducing substance.

22. The method according to any one of the claims 1 to 21, **characterized in that** the mean dwell time of the melt between end reactor and entry in the moulding unit is a maximum of 30 minutes, preferably a maximum of 15 minutes and particularly preferably 12 minutes.

23. The method according to any one of the claims 1 to 22, **characterized in that** the melt line is able to perform a horizontal movement of the moulding device by at least 100 cm, preferably at least 50 cm, particularly preferably a maximum of 30 cm between the last additive adding unit and the entry in the moulding device.

24. The method according to any one of the claims 1 to 23, **characterized in that** the melt line is designed for an operating pressure of a maximum of 200 bar and a maximum of 320°C, preferably 280 - 285°C.

25. The method for the manufacture of moulded bodies of a highly condensed polyester melt, **characterized in that**

- 50 - 100% of the melt issuing from the end reactor enters the moulding units,
- the diverted part of the melt is returned to the esterification stage and optionally also to a granulating device,
- the main melt flow is directed to an even number of moulding units,
- an additive adding unit is arranged in the melt line after the last melt distributor and before each moulding unit,
- at least an acetaldehyde-reducing substance or at least an acetaldehyde-reducing substance mixture is added as solid material or dispersion to the main melt flow before the entry in the moulding unit and
- the melt between the polycondensation reactor/s and the moulding units never solidifies and no degassing device is present between end reactor and moulding unit.

26. The device for the manufacture of moulded bodies from a highly condensed polyester melt, wherein the melt between the polycondensation reactor and the moulding units never solidifies and no degassing device is present between end reactor and moulding units, **characterized in that** at least two additive adding units are arranged in the melt line between the polycondensation reactor and a moulding unit.

27. The device according to claim 26, **characterized in that** each of the pipelines arranged in parallel for delivering the main melt flow to the moulding units has the same design.

28. The device according to claim 27, **characterized in that** static mixers, the length of which amounts to a maximum of 1 to 6 times, preferably a maximum of 1 to 3 times the inner diameter of the pipeline, are employed alternately but at least upstream of each pipeline division to homogenize the melt.

29. The device according to any one of the claims 27 to 28, **characterized in that** the pipeline between the last additive adding unit and the moulding unit is so flexible that it allows a horizontal movement of the moulding unit.

30. The device according to any one of the claims 27 to 29, **characterized in that** the flexible pipeline contains scissors-type pipe joints the joints of which have either only vertical or only horizontal fulcrums, are employed for the permanent connection between the rigid melt line and the moulding unit.

31. The device according to any one of the claims 27 to 30, **characterized in that** the melt line between the last additive unit and the moulding unit enables a horizontal movement of the moulding unit by a maximum of 100 cm, preferably by a maximum of 50 cm, particularly preferably by a maximum of 30 cm.

32. The device according to claim 26, **characterized in that** the pipeline between the last additive adding unit and the moulding unit contains a scissors-type pipe joint which allows a horizontal movement of the moulding unit.

**Revendications**

1. Procédé de fabrication de corps moulés avec une teneur en acétaldéhyde sous forme d'une ébauche de 8 ppm au maximum, en une masse fondue de polyester fortement condensée, un réacteur de polycondensation du type High Viscosity Self-cleaning Reactor (HVSR) ou du type du Double Drive Reactor étant utilisé en tant que réacteur final, **caractérisé en ce que** la masse fondue ne se solidifie jamais entre le réacteur de polycondensation et les unités de façonnage et **en ce que**, aucun dispositif de dégazage n'est présent entre le réacteur final et les unités de façonnage et **en ce qu'**on ajoute par dosage une fois ou au maximum deux fois au courant principal de masse fondue, avant l'entrée dans les unités de façonnage une substance à effet réducteur d'acétaldéhyde.

2. Procédé selon la revendication 1, **caractérisé en ce que** de 50 à 100 % de la masse fondue sortant du réacteur final pénètrent dans les unités de façonnage.

3. Procédé selon l'une quelconque des revendications 1 à 2, **caractérisé en ce que** le réglage de la pression d'alimentation pour les unités de façonnage est assuré par éclusage d'une partie de la masse fondue.

4. Procédé selon l'une quelconque des revendications 1 à 3, **caractérisé en ce que** le contrôle de la pression dans le conduit de masse fondue est assuré directement en amont des unités de façonnage, sous une pression comprise entre 1 et 20 bar, de préférence 10 ± 1 bar, par régulation de l'éclusage du courant de masse fondue.

5. Procédé selon l'une quelconque des revendications 1 à 4, **caractérisé en ce que** la partie éclusée de la masse fondue est ramenée vers l'étape d'estérification et au choix, vers un dispositif de granulation.

6. Procédé selon l'une quelconque des revendications 1 à 5, **caractérisé en ce que**, entre 0 et 50 % de la masse fondue sortant du réacteur final sont ramenés vers l'étape d'estérification et vers un dispositif de granulation.

7. Procédé selon l'une quelconque des revendications 1 à 6, **caractérisé en ce que**, au maximum 20 %, de préférence au maximum 10 % de la masse fondue sortant du réacteur final sont ramenés vers l'étape d'estérification.

8. Procédé selon l'une quelconque des revendications 1 à 7, **caractérisé en ce que** un maximum de 10 % d'éthylène glycol est amené dans la masse fondue fortement visqueuse ramenée vers l'étape d'estérification.

9. Procédé selon l'une quelconque des revendications 1 à 8, **caractérisé en ce que**, au moins deux réacteurs finaux, alimentant deux unités de façonnage sont utilisés en parallèle.

10. Procédé selon l'une quelconque des revendications 1 à 9, **caractérisé en ce que** la masse fondue est conduite à partir d'un réacteur final vers au moins deux unités de façonnage.

11. Procédé selon l'une quelconque des revendications 1 à 10, **caractérisé en ce que**, au moins un pompe d'augmentation de la pression est utilisée en amont de la première distribution de masse fondue.

12. Procédé selon l'une quelconque des revendications 1 à 11, **caractérisé en ce que** le courant principal de masse fondue est dirigé à partir d'un réacteur vers un nombre pair d'unité de façonnage.

13. Procédé selon l'une quelconque des revendications 1 à 12, **caractérisé en ce que**, avant l'entrée dans l'unité de façonnage, une substance ou un mélange de substances est ajouté au courant de masse fondue, sous forme de matière solide ou de pâte.

14. Procédé selon l'une quelconque des revendications 1 à 13, **caractérisé en ce que**, une unité d'ajout d'additif est présente en amont de la première pompe d'augmentation de pression.

15. Procédé selon l'une quelconque des revendications 1 à 14, **caractérisé en ce que**, une unité d'ajout d'additif est disposée dans le conduit de masse fondue, en aval du dernier distributeur de masse fondue et en amont de chaque unité de façonnage.

16. Procédé selon l'une quelconque des revendications 1 à 15, **caractérisé en ce que**, au moyen des unités d'ajout d'additif disposées en aval du dernier distributeur de masse fondue, différents additifs et/ou différentes substances supplémentaires issues de différentes machines de préformage sont ajoutés à la masse fondue.

17. Procédé selon l'une quelconque des revendications 1 à 16, **caractérisé en ce que** le temps de séjour moyen de la masse fondue entre l'unité d'ajout d'additif et l'entrée dans l'unité de façonnage est d'un maximum de 6 minutes, de préférence d'un maximum de 2 minutes.

18. Procédé selon l'une quelconque des revendications 1 à 17, **caractérisé en ce que**, dans le conduit de masse fondue, en aval de la première unité d'ajout d'additif est utilisé un élément mélangeur statique, d'une longueur minimale de 15 D.

19. Procédé selon l'une quelconque des revendications 1 à 18, **caractérisé en ce que**, en aval de la deuxième unité d'ajout d'additif, dans le conduit de masse fondue, directement en amont des cisailles à articulations tournantes, dans lesquelles l'agencement à tubes articulés se situait à l'horizontale, avec des axes de rotation perpendiculaires, un élément mélangeur statique d'une longueur minimale de 3 D est utilisé dans le conduit de masse fondue.

20. Procédé selon l'une quelconque des revendications 1 à 19, **caractérisé en ce que** l'additif contient au moins un composé contenant du phosphore.

21. Procédé selon l'une quelconque des revendications 1 à 20, **caractérisé en ce que** l'additif contient au moins une substance réductrice d'acétaldéhyde.

22. Procédé selon l'une quelconque des revendications 1 à 21, **caractérisé en ce que** le temps de séjour de la masse fondue entre le réacteur final et l'entrée dans l'unité de façonnage est d'un maximum de 30 minutes, de préférence d'un maximum de 15 minutes et de façon particulièrement préférée de 12 minutes.

**23.** Procédé selon l'une quelconque des revendications 1 à 22, **caractérisé en ce que**, entre la dernière unité d'ajout d'additif et l'entrée dans le dispositif de façonnage, le conduit de masse fondue est susceptible d'effectuer un déplacement horizontal du dispositif de façonnage, d'au moins 100 cm, de préférence d'au moins 50 cm, de façon particulièrement préférée d'un maximum de 30 cm.

**24.** Procédé selon l'une quelconque des revendications 1 à 23, **caractérisé en ce que** le conduit de masse fondue est conçu pour une pression de service d'un maximum de 200 bar et pour un maximum de 320°C, de préférence de 280 à 285 °C.

**25.** Procédé de fabrication de corps moulés en une masse fondue de polyester hautement condensée, **caractérisé en ce que**

- de 50 à 100 % de la masse fondue sortant du réacteur final pénètrent dans les unités de façonnage,
- la partie éclusée de la masse fondue est amenée vers l'étape d'estérification et au choix, également vers un dispositif de granulation,
- le courant principal de masse fondue est dirigé vers un nombre pair d'unités de façonnage,
- une unité d'ajout d'additif est disposée dans le conduit de masse fondue, en aval du dernier distributeur de masse fondue et en amont de chaque unité de façonnage,
- avant l'entrée dans l'unité de façonnage, au moins une substance réductrice d'acétaldéhyde ou au moins un mélange de substances réducteur d'acétaldéhyde est ajouté sous forme de matière solide ou de dispersion au courant principal de masse fondue et
- entre le(s) réacteur(s) de polycondensation et les unités de façonnage, la masse fondue ne se solidifie jamais et aucun dispositif de dégazage n'est présent entre le réacteur final et l'unité de façonnage.

**26.** Dispositif pour la fabrication de corps moulés en une masse fondue de polyester fortement condensée, la masse fondue ne se solidifiant jamais entre le réacteur de polycondensation et les unités de façonnage et aucun dispositif de dégazage n'étant présent entre le réacteur final et les unités de façonnage, **caractérisé en ce que**, au moins deux unités d'ajout d'additif sont disposées dans le conduit de masse fondue, entre le réacteur de polycondensation et une unité de façonnage.

**27.** Dispositif selon la revendication 26, **caractérisé en ce que** les tuyauteries disposées en parallèle pour le transport du courant principal de masse fondue vers les unités de façonnage présentent chacune le même design.

**28.** Dispositif selon la revendication 27, **caractérisé en ce que** pour l'homogénéisation de la masse fondue, des mélangeurs statiques, dont la longueur correspond au maximum à de une à six fois, de préférence à de une à trois fois la diamètre intérieur de la tuyauterie sont utilisés en alternance, mais au moins en amont de chaque distribution de tuyauterie.

**29.** Dispositif selon l'une quelconque des revendications 27 à 28, **caractérisé en ce que** la tuyauterie entre la dernière unité d'ajout d'additif et l'unité de façonnage est si flexible, qu'elle permet un déplacement horizontal de l'unité de façonnage.

**30.** Dispositif selon l'une quelconque des revendications 27 à 29, **caractérisé en ce que** la tuyauterie flexible contient des cisailles à articulations tubulaires, dont les articulations ne comportent, soit que des axes de rotation verticaux ou horizontaux, qui sont utilisés pour le raccordement permanent entre le conduit rigide de masse fondue et l'unité de façonnage.

**31.** Dispositif selon l'une quelconque des revendications 27 à 30, **caractérisé en ce que**, entre la dernière unité d'additif et l'unité de façonnage, le conduit de masse fondue permet un déplacement horizontal de l'unité de façonnage d'un maximum de 100 cm, de préférence d'un maximum de 50 cm, de façon particulièrement préférée d'un maximum de 30 cm.

**32.** Dispositif selon la revendication 26, **caractérisé en ce que**, entre la dernière unité d'ajout d'additif et l'unité de façonnage, la tuyauterie contient des cisailles à articulations tubulaires tournantes, qui permettent un déplacement horizontal de l'unité de façonnage.